# EUROPEAN PATENT SPECIFICATION

(11) **EP 2 722 494 B1**
(45) Date of publication and mention of the grant of the patent: **07.02.2018**
(21) Application number: 12290359.4
(22) Date of filing: 19.10.2012
(51) Int. Cl.: F01D 25/16, F02C 6/12, F04D 29/059, F16C 19/18

(54) **Turbocharger, notably for a combustion engine, and method for manufacturing such a turbocharger**
Turbolader, insbesondere für einen Verbrennungsmotor und Verfahren zur Herstellung solch eines Turboladers
Turbocompresseur, en particulier pour un moteur à combustion et procédé de fabrication d'un tel turbocompresseur

(43) Date of publication of application: 23.04.2014
(73) Proprietor: Aktiebolaget SKF, 415 50 Göteborg (SE)
(72) Inventor: Berruet, Nicolas, 37260 Artannes sur Indre (FR); Brosseaud, Marie, 37270 Montlouis sur Loire (FR); Ghilber-Simon, Aurelien, 37390 Saint Roch (FR); Hauvespre, Benoit, 37390 Mettray (FR); Hingouet, Gwenael, 37540 Saint Cyr sur Loire (FR)
(74) Representative: Kohl, Thomas

(56) References cited:
- EP-A2- 2 065 562
- WO-A1-2012/079788
- DE-A1-102011 008 905
- US-A1- 2008 006 357

## Description

The invention relates to the field of turbochargers, and in particular those used in combustion engines for automotive vehicles.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing.

When the turbine wheel is rotated by the flow of the exhaust gases, the shaft and the compressor wheel are rotated which leads to a compression of the admission gases introduced into the cylinders of the combustion engine.

However, in order to disassemble the rolling bearings from the shaft, an axial load is generally applied to the shaft, which may lead to indentations on the raceways of the rolling bearings. The damaged rolling bearings have thus to be replaced.

Replacing the rolling bearings after each disassembly procedure leads to an increase of the mounting cost.

DE 10 2011 008905 A1 describes a turbocharger with a double row angular ball bearing wherein said bearing comprises an outer ring, an inner ring split in two parts, a first row of balls radially located between the outer ring and a first inner ring and a second row of balls radially located between the outer ring and a second inner ring. The first inner ring comprises an end forming a conical surface, said ring having a stepped outer surface with a shoulder directed towards the exterior of the turbocharger. The second inner ring comprises an end forming a conical surface, said ring having a stepped inner bore with a shoulder directed towards the interior of the turbocharger. The two adjacent ends of the two adjacent inner rings are attached together by the cooperation of the two conical surfaces. The two surfaces are press-fitted one each other so to produce a self-locking cone.

However, the quality of the assembly by such a method is highly dependent on the machining accuracy of the contact surfaces. Moreover, the assembly in force may cause deformation of the inner rings. Both may induce misalignment of rolling contact of the rolling element and then a misuse of the rolling bearing. Another disadvantage of the assembly is that the means are circumferentially attached. The inner rings may rotate relatively with respect to each other. The same applies to the devices disclosed in WO 2012/079788 A1 and EP 2 065 562 A2.

It is therefore a particular object of the present invention to overcome this aforementioned drawback by providing a turbocharger which is simple to manufacture and economic while guaranteeing a disassembly of the rolling bearings without damaging the rolling bearings or the shaft.

Another object of the invention is to provide a method for manufacturing such a turbocharger.

The invention concerns a turbocharger according to claim 1 comprising a shaft and a housing. The turbocharger also comprises at least two rolling bearings axially adjacent and radially located between the shaft and the housing, each rolling bearing comprising an inner ring, an outer ring and at least one row of rolling elements between raceways provided on the rings. Two adjacent inner rings of two rolling bearings are attached together by fixing means. An end of a first inner ring of two adjacent inner rings to be attached comprises a stepped bore forming a shoulder directed towards the exterior of the turbocharger. The adjacent end of the second inner ring comprises a stepped outer surface forming a shoulder directed towards the interior of the turbocharger. The two adjacent ends having each an L-shape with a thinner portion are form fitting and cooperate together by defining adjacent fixing surfaces by which the inner rings are attached together by fixing means.

According to the invention, each end having an L-shape is provided with at least one through-hole or through-opening on their thinner portion. The at least one through-hole or through-opening of two adjacent ends having an L-shape is facing the other. The fixing means between two adjacent inner rings consist in force-mounting a pin in each through-hole or through-opening of the two adjacent ends.

Advantageously, the extracting force to be axially applied to separate one inner ring to the other must be higher than the extracting force to separate the shaft from the rolling bearings.

For example, the extracting force to be axially applied to separate the shaft from the rolling bearings is about 3.5 kN and the extracting force to separate one inner ring to the other has to be higher than this value.

Thanks to this invention, the shaft can be disassembled from the turbocharger without damaging the rolling bearings.

According to further aspects of the invention, which are advantageous but not compulsory, such a rolling bearing may incorporate one or several of the following features as long as there is no contradiction:
- The rolling elements of the rolling bearings are balls.
- The rolling elements are circumferentially maintained by a cage.
- The outer rings of the axially adjacent rolling bearings form one unique outer ring.
- At least one outer ring comprises at least one opening for inserting and/or manufacturing the fixing means.
- The at least one opening of the least one outer ring is radially facing the adjacent fixing surfaces of two adjacent inner rings attached or to be attached together.
- The at least one opening of the least one outer ring also serves as a lubricant injector into the rolling bearings.
- The inner rings of the rolling bearings have a stepped bore adapted to cooperate with a stepped outer cylindrical surface of the shaft.
- The inner ring of at least one rolling bearing disposed at one end of the turbocharger (on the turbine wheel side and/or the compressor wheel side) is provided with at least one positioning means adapted to cooperate with an external mounting tool, such as an extractor or a hub puller.
- The positioning means may comprise at least one annular groove, at least one threaded portion, at least one radial hole or opening or a radial through-hole or through-opening made through the thickness of the inner ring.

According to another aspect of the present invention, it is proposed a method according to claim 4 of manufacturing such a turbocharger as disclosed above, comprising the steps of:
- Inserting rolling elements into raceways of inner rings.
- Mounting successively the adjacent inner rings provided with the rolling elements into the outer rings bore, such as to have facing adjacent fixing surfaces.
- Attaching the adjacent fixing surfaces of the adjacent inner rings together by fixing means.

Advantageously, the method of manufacturing such an assembly also comprises the step of inserting the fixing means into an opening of the outer ring for attaching the adjacent inner rings together.

As an alternative, the method of manufacturing such an assembly also comprises the step of inserting the fixing means into the inner rings internal bore.

The present invention and its advantages will be better understood by studying the detailed description of specific embodiments given by way of non-limiting examples and illustrated by the appended drawings on which:
- Figure 1 is an axial section of a turbocharger according to an embodiment not forming part of the invention;
- Figure 2 is an axial section of a rolling bearings assembly according to an embodiment not forming part of the invention;
- Figure 3 is an axial section of a rolling bearings assembly according to an embodiment of the invention; and
- Figure 4 is an axial section of a rolling bearings assembly according to an embodiment not forming part of the invention.

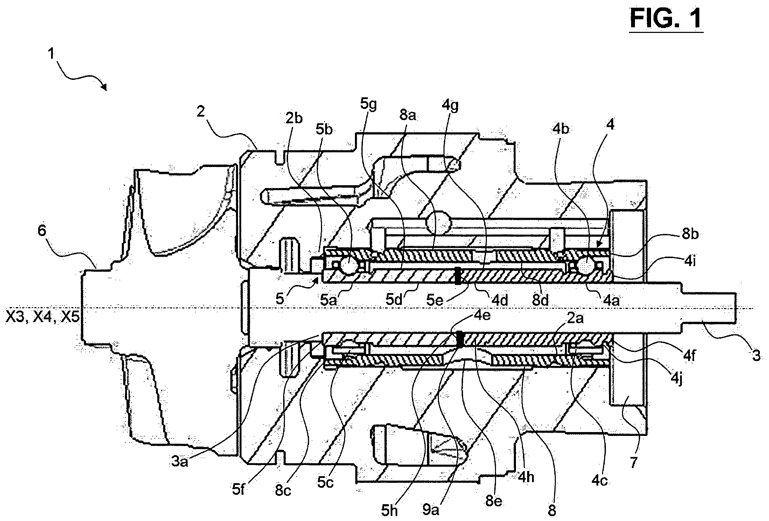

Referring first to Figure 1, which illustrates an embodiment of a turbocharger 1 not forming part of the invention, the turbocharger 1 comprises a housing 2, a shaft 3 extending along an axial axis X3 through a cylindrical bore 2a of the housing 2, two rolling bearings 4, 5 disposed into the bore 2a.

The turbocharger also comprises a turbine wheel 6 fixed at one end of the shaft 3, a compressor wheel (not illustrated) fixed at an opposite end of said shaft 3 and a cap 7 fixed at an axial end of the housing 2.

The rolling bearings 4, 5 have a common unique outer ring 8. Each rolling bearing 4, 5 comprises an inner ring 4a, 5a each defining with the outer ring 8 a rolling chamber wherein are inserted one row of rolling elements 4b, 5b, for example balls, which are circumferentially spaced maintained by an annular cage 4c, 5c.

The axis X4, X5 of each rolling bearing 4, 5 respectively is coaxial with the axis X3 of the shaft 3 in normal use.

In this embodiment and the following ones, the terms "axial" and "radical" are defined in relation to the axis X3 of relative rotation of the inner rings 4a, 5a and outer ring 8. Then an axial portion is parallel to this axis of rotation and a radial portion is perpendicular to this axis. We also define the terms "interior" and "exterior" in relation to the axis X3, such as the interior side of the turbocharger 1 corresponds to the axis X3 and the exterior side is on the opposite of this axis X3 by the turbocharger 1.

The rings 4a, 5a, 8 are of the solid type that is to be understood as rings obtained by machining with removal of material (by machining, grinding) from metal tube stock, bar stock, rough forgings and/or roller blanks.

The outer ring 8 comprises an outer cylindrical surface 8a delimited by opposite radial lateral surfaces 8b, 8c which respectively axially come into contact with the cap 8 and a radial shoulder 2b of the housing 2.

The outer ring 8 also comprises a bore 8d of cylindrical shape from which are formed two toroidal raceways having in cross-section a concave internal profile adapted to the rolling elements 4b, 5b. The raceways are symmetrical with respect to the transverse radial plane passing through the centre of the outer ring 8.

The housing 2 comprises lubricant channels connected to a through opening 8e provided into the thickness of the outer ring 8 and dedicated for the lubricant injection into the rolling bearings.

Each inner ring 4a, 5a has a bore 4d, 5d of cylindrical shape into which the shaft 3 is mounted. Said bore 4d, 5d is delimited by opposite radial lateral surfaces 4e, 4f; 5e, 5f respectively. The radial lateral surface 5f of the inner ring 5a of the rolling bearing 5 axially bears against a radial shoulder 3a of the shaft 3. The radial lateral surface 4f of the inner ring 4a of the rolling bearing 4 axially bears against the cap 7. Each inner ring 4a, 5a also comprises an outer cylindrical surface 4g, 5g onto which two toroidal circular raceways, having in cross-section a concave internal profile adapted to the rolling elements 4b, 5b, are formed.

The two inner rings 4a and 5a have two adjacent ends 4h and 5h. The two internal radial lateral surfaces 4e and 5e are adjacent and are axially facing each other. These two surfaces 4e and 5e form fixing surfaces for the associated adjacent inner rings 4a and 5a wherein fixing means 9a are interposed.

According to the embodiment illustrated in Fig. 1, the fixing means 9a consist in glue deposited between the two lateral surfaces 4e and 5e. As an alternative, the fixing means 9a consist in a welding realized between the two lateral surfaces 4e and 5e.

The gluing tool or the welding tool can be inserted into the lubricant opening 8e of the outer ring 8 since this opening 8e is radially facing the fixing lateral surfaces 4e and 5e enabling an easy access for the manufacturing operator.

As illustrated in Fig. 1, the inner ring 4a of the rolling bearing 4 on the side of the compressor wheel, opposite to the side of the turbine wheel 6, has its external end 4i provided with a positioning means 4j adapted to cooperate with an external tool (not illustrated) used, for example in order to disassemble the shaft 3 from the inner rings 4a, 5a attached together.

In the illustrated embodiment of Fig. 1, the positioning means 4j comprises an annular groove provided on the outer cylindrical surface 4g. As alternatives (not illustrated), the positioning means 4j may comprises a threaded portion adapted to cooperate with a threaded tool, at least one radial recess, at least one radial through-hole or at least one radial through-opening made through the thickness of the inner ring 4a.

Furthermore, the turbocharger 1 may be provided with sealing rings (not illustrated) on the sides of the compressor wheel and the turbine wheel 6 for avoiding any entry of unwanted dusts or water.

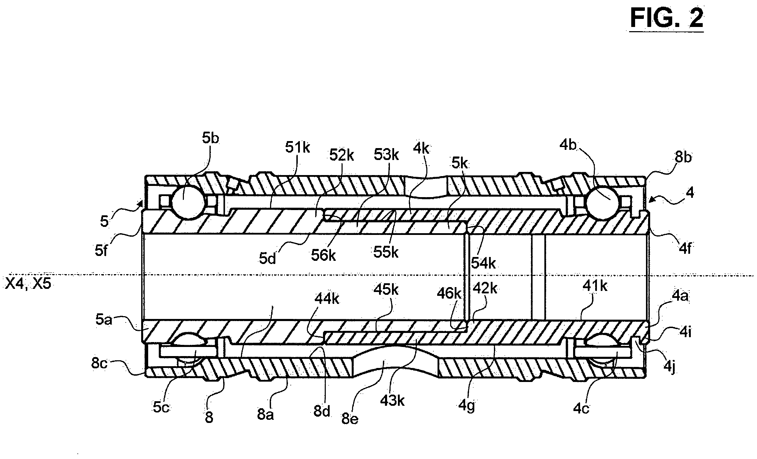

The embodiment illustrated in Figure 2, not forming part of the invention, and in which identical elements bear the same references, differs from the embodiments of Figure 1 in that the adjacent ends 4k, 5k of the inner rings 4a, 5a have an L-shape.

The end 4k of the inner ring 4a of the rolling bearing 4 comprises a stepped bore surface 41k forming a shoulder 42k directed towards the interior of the turbocharger. The end 4k of the inner ring 4a has an L shape with a thinner portion 43k. It defines a first radial portion 44k, an axial portion 45k and a second radial portion 46k.

The end 5k of the inner ring 5a of the rolling bearing 5 comprises a stepped outer surface 51k forming a shoulder 52k directed towards the exterior of the turbocharger. The end 5k of the inner ring 5a has an L shape with a thinner portion 53k. It defines a first radial portion 54k, an axial portion 55k and a second radial portion 56k.

The two adjacent ends 4k, 5k cooperates together such as the surface 44k radially bears against the surface 56k, the surface 45k axially bears against the surface 55k and the surface 46k radially bears against the surface 54k.

In the embodiment illustrated in Fig. 2, the axial surface 45k has an outer diameter slightly smaller than the outer diameter of the axial surface 55k. The two ends 4k, 5k are press-fitted together for attaching the two adjacent inner rings 4a, 5a together. The two ends 4k, 5k form the fixing means for the two adjacent rings 4a, 5a and the two surfaces 45k, 55k form the fixing surfaces for the two adjacent rings 4a, 5a.

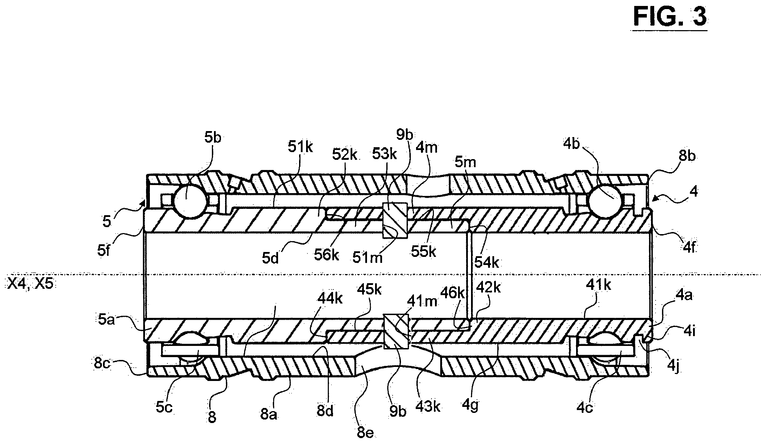

The embodiment according to the invention illustrated in Figure 3, in which identical elements bear the same references, differs from the embodiments of Figure 2 in that the adjacent ends 4m, 5m of the inner rings 4a, 5a are similar to the adjacent ends 4k, 5k respectively but are each provided with through holes 41m, 51m.

One through hole 41m provided on end 4m of an inner ring 4a is radially facing one through hole 51m provided on the other end 5m of the inner ring 5a. Both through holes 41m, 51m have the same diameter. The fixation means 9b between the two adjacent ends of the two adjacent inner rings 4a, 5a consist in radial pins 9b inserted in each associated through holes 41m, 51m.

The pins 9b have an outer diameter slightly higher than the inner diameter of the through holes 41m, 51m. The pins 9b are press-fitted into the associated holes 41m, 51m.

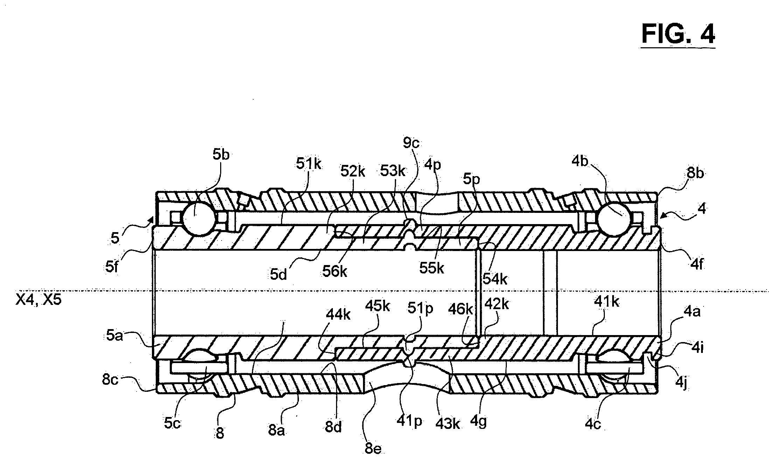

The embodiment illustrated in Figure 4, not forming part of the invention and in which identical elements bear the same references, differs from the embodiments of Figures 2 and 3 in that the fixation means 9c of the adjacent ends 4p, 5p consist in cooperating bumps 51p and recesses 41p provided on the ends 4p, 5p.

The associated bumps 51p and recesses 41p are realized by caulking the thinner portions 43k, 53k together by inserting a caulking tool via the opening 8e of the outer ring 8 or via the inner rings internal bore 4d, 5d. As an alternative, the caulking process is independently realized on each of the thinner portions 43k, 53k which are then mounted together such as clips.

The bumps 51p and the recesses 41p are circumferentially spaced. As an alternative, the bumps 51p and the recesses 41p are circumferential.

The present invention also concerns an assembly process which comprises the following steps:
- The rolling elements 4b, 5b are inserted into the raceways of the two inner rings 4a, 5a respectively.
- The assembled rolling elements 4b, 5b and inner rings 4a, 5a are mounted successively into the unique outer ring 8, such as to have the fixing surface 4e of the first inner ring 4a facing the adjacent fixing surface 5e of the second inner ring 5a.
- The adjacent fixing surfaces of the adjacent inner rings 4a, 5a are attached together by fixing means 9a; 9b; 9c; 4k, 5k. The fixing means may be inserted via the opening 8e of the outer ring 8 or via the inner rings internal bore 4d, 5d.

As an alternative, not forming part of the invention, the assembly process for a turbocharger wherein the adjacent inner rings 4a, 5a are glued comprises the following steps:
- The glue 9a is deposited on adjacent fixing surfaces of adjacent inner rings 4a, 5a.
- The rolling elements 4b, 5b are inserted into the raceways of the two inner rings 4a, 5a respectively.
- The assembled rolling elements 4b, 5b and inner rings 4a, 5a are mounted successively into the unique outer ring 8, such as to have the fixing surface of the first inner ring 4a facing the adjacent fixing surface of the second inner ring 5a.

In this specific mounting process with glue as fixing means 9a, the glue can be deposited onto the fixing surfaces before the mounting. Then the inner rings 4a, 5a are mounted and the glued adjacent surfaces bearing each other for finalizing the inner rings attachment.

It should be noted that the embodiments illustrated and described were given merely by way of non-limiting indicative examples and that modifications and variations are possible within the scope of the invention.

Thanks to the invention, the shaft is easily disassembled from the rolling bearings without damaging them during the disassembly procedure.

Furthermore, positioning means located on an end of one inner ring makes it possible to cooperate with an external tool.

## Claims

1. Turbocharger (1) comprising a shaft (3), a housing (2), at least two rolling bearings (4, 5) axially adjacent and radially located between the shaft (3) and the housing (2), each rolling bearing (4, 5) comprising an inner ring (4a, 5a), an outer ring (8) and at least one row of rolling elements (4b, 5b) between raceways provided on the rings, two adjacent inner rings (4a, 5a) of two adjacent rolling bearings (4, 5) being attached together by fixing means (9b) wherein
- an end (4m) of a first inner ring (4a) of two adjacent inner rings (4a, 5a) to be attached comprises a stepped bore (41k) forming a shoulder (42k) directed towards the exterior of the turbocharger (1),
- the adjacent end (5m) of the second inner ring (5a) comprises a stepped outer surface (51k) forming a shoulder (52k) directed towards the interior of the turbocharger (1), and
- the two adjacent ends (4m; 5m) each have an L-shape with a thinner portion (43k, 53k) and cooperate together by defining adjacent fixing surfaces (45k, 55k) by which the inner rings (4a, 5a) are attached together by fixing means (9b),
**characterized in that** each end (4m, 5m) is provided with at least one through-hole or through-opening (41m, 51m) on their thinner portion (43k, 53k) and wherein the fixing means (9b) between two adjacent inner rings (4a, 5a) consist in a force-mounted pin (9b) in each through-hole or through-opening (41m, 51m) of the two adjacent ends (4m, 5m).

2. Turbocharger (1) according to claim 1 wherein at least one outer ring (8) comprises at least one opening (8e) for inserting the fixing means (9b).

3. Turbocharger (1) according to any of the preceding claims wherein the inner ring (4a) of at least one rolling bearing (4) disposed at one end of the turbocharger (1) is provided with at least one positioning means (4j) adapted to cooperate with an external mounting tool.

4. Method of manufacturing a turbocharger according to any of the preceding claims, comprising the steps of:
- Inserting rolling elements (4b, 5b) into raceways of inner rings (4a, 5a);
- Mounting successively the adjacent inner rings (4a, 5a) provided with the rolling elements (4b, 5b) into the bore (8d) of the outer rings (8), such as to have facing adjacent fixing surfaces (4e, 5e; 45k, 55k); and
- Attaching the adjacent fixing surfaces (4e, 5e; 45k, 55k) of the adjacent inner rings (4a, 5a) together by inserting pins (9b) in through-holes or through-openings (41m, 51m) of the two adjacent ends (4m, 5m).

5. Method according to claim 2, comprising the additional step of inserting the pins (9b) into the bore (4d, 5d; 41k) of the inner rings (4a, 5a) and/or into an opening (8e) of the outer ring (8) for attaching the adjacent inner rings (4a, 5a) together.

## Patentansprüche

1. Turbolader (1), aufweisend eine Welle (3), ein Gehäuse (2), mindestens zwei axial benachbarte und radial zwischen der Welle (3) und dem Gehäuse (2) angeordnete Wälzlager (4, 5), wobei jedes Wälzlager (4, 5) einen inneren Ring (4a, 5a), einen äußeren Ring (8) und mindestens eine Reihe von Wälzkörpern (4b, 5b) zwischen Laufbahnen aufweist, welche auf den Ringen vorgesehen sind, wobei zwei benachbarte innere Ringe (4a, 5a) von zwei benachbarten Wälzlagern (4, 5) durch Befestigungsmittel (9b) miteinander befestigt sind, wobei
- ein Ende (4m) eines ersten inneren Rings (4a) von zwei zu befestigenden benachbarten inneren Ringen (4a, 5a) eine abgestufte Bohrung (41k) aufweist, welche eine in Richtung auf die Außenseite des Turboladers (1) gerichtete Schulter (42k) bildet,
- das benachbarte Ende (5m) des zweiten inneren Rings (5a) eine abgestufte äußere Oberfläche (51k) aufweist, welche eine Schulter (52k) bildet, welche in Richtung auf das Innere des Turboladers (1) gerichtet ist, und
- die zwei benachbarten Enden (4m, 5m) jeweils eine L-Form mit einem dünneren Abschnitt (43k, 53k) aufweisen und miteinander zusammenwirken, indem sie benachbarte Befestigungsflächen (45k, 55k) definieren, durch welche die inneren Ringe (4a, 5a) durch Befestigungsmittel (9b) miteinander befestigt sind,
**dadurch gekennzeichnet, dass** jedes Ende (4m, 5m) mit mindestens einem Durchgangsloch oder einer Durchgangsöffnung (41m, 51m) an ihrem dünneren Abschnitt (43k, 53k) versehen ist und wobei die Befestigungsmittel (9b) zwischen zwei benachbarten inneren Ringen (4a, 5a) aus einem Kraft montierten Stift (9b) in jedem Durchgangsloch oder jeder Durchgangsöffnung (41m, 51m) der zwei benachbarten Enden (4m, 5m) bestehen.

2. Turbolader (1) nach Anspruch 1, wobei mindestens ein äußerer Ring (8) mindestens eine Öffnung (8e) zum Einsetzen der Befestigungsmittel (9b) aufweist.

3. Turbolader (1) nach einem der vorhergehenden Ansprüche, wobei der innere Ring (4a) von mindestens einem Wälzlager (4), welches an einem Ende des Turboladers (1) angeordnet ist, mit mindestens einem Positionierungsmittel (4j) versehen ist, welches dafür angepasst ist, um mit einem externen Montagewerkzeug zusammenzuwirken.

4. Verfahren zur Herstellung eines Turboladers nach einem der vorhergehenden Ansprüche, aufweisend die Schritte:
- Einsetzen von Wälzkörpern (4b, 5b) in Laufbahnen von inneren Ringen (4a, 5a);
- nacheinander Montieren der benachbarten inneren Ringe (4a, 5a), welche mit den Wälzkörpern (4b, 5b) versehen sind, derartig in die Bohrung (8d) der äußeren Ringe (8), um benachbarte, zugewandte Befestigungsflächen (4e, 5e; 45k, 55k) aufzuweisen und
- miteinander Befestigen der benachbarten Befestigungsflächen (4e, 5e; 45k, 55k) der benachbarten inneren Ringe (4a, 5a) durch Einsetzen von Stiften (9b) in Durchgangsbohrungen oder Durchgangsöffnungen (41m, 51m) der zwei benachbarten Enden (4m, 5m).

5. Verfahren nach Anspruch 2, aufweisend den zusätzlichen Schritt des Einsetzens der Stifte (9b) in die Bohrung (4d, 5d; 41k) der inneren Ringe (4a, 5a) und/oder in eine Öffnung (8e) des äußeren Rings (8), um die benachbarten inneren Ringe (4a, 5a) miteinander zu befestigen.

## Revendications

1. Turbocompresseur (1) comprenant un arbre (3), un boîtier (2), au moins deux paliers à roulement (4, 5) axialement adjacents et radialement situés entre l'arbre (3) et le boîtier (2), chaque palier à roulement (4, 5) comprenant un anneau intérieur (4a, 5a), un anneau extérieur (8) et au moins un rangée d'éléments roulants (4b, 5b) entre des chemins de roulement prévus sur les anneaux, deux anneaux intérieurs adjacents (4a, 5a) de deux paliers à roulement adjacents (4, 5) étant attachés l'un à l'autre à l'aide de moyens de fixation (9b), dans lequel
- une extrémité (4m) d'un premier anneau intérieur (4a) de deux anneaux intérieurs adjacents (4a, 5a) à attacher présente un alésage étagé (41k) qui forme un épaulement (42k) orienté en direction de l'extérieur du turbocompresseur (1),
- l'extrémité adjacente (5m) du second anneau intérieur (5a) présente une surface extérieure étagée (51k) qui forme un épaulement (52k) orienté en direction de l'intérieur du turbocompresseur (1), et
- les deux extrémités adjacentes (4m; 5m) présentent chacune une forme de L avec une partie plus mince (43k, 53k) et coopèrent l'un avec l'autre en définissant des surfaces de fixation adjacentes (45k, 55k) par lesquelles les anneaux intérieurs (4a, 5a) sont attachés l'un à l'autre par les moyens de fixation (9b),
**caractérisé en ce que** chaque extrémité (4m, 5m) comporte au moins un trou traversant ou une ouverture traversante (41m, 51m) sur sa partie plus mince (43k, 53k), et dans lequel les moyens de fixation (9b) entre deux anneaux intérieurs adjacents (4a, 5a) consistent en une broche montée avec force (9b) dans chaque trou traversant ou ouverture traversante (41m, 51m) des deux extrémités adjacentes (4m, 5m).

2. Turbocompresseur (1) selon la revendication 1, dans lequel au moins un anneau extérieur (8) comporte au moins une ouverture (8e) pour insérer les moyens de fixation (9b).

3. Turbocompresseur (1) selon l'une quelconque des revendications précédentes, dans lequel l'anneau intérieur (4a) d'au moins un palier à roulement (4) disposé à une extrémité du turbocompresseur (1) est pourvu d'au moins un moyen de positionnement (4j) adapté pour coopérer avec un outil de montage externe.

4. Procédé de fabrication d'un turbocompresseur selon l'une quelconque des revendications précédentes, comprenant les étapes suivantes:
- insérer des éléments roulants (4b, 5b) dans des chemins de roulement d'anneaux intérieurs (4a, 5a);
- monter successivement les anneaux intérieurs adjacents (4a, 5a) pourvus des éléments roulants (4b, 5b) dans l'alésage (8d) des anneaux extérieurs (8), de telle sorte que les surfaces de fixation adjacentes (4e, 5e; 45k, 55k) soient face à face; et
- attacher les surfaces de fixation adjacentes (4e, 5e; 45k, 55k) des anneaux intérieurs adjacents (4a, 5a) l'une à l'autre en insérant des broches (9b) dans les trous traversants ou les ouvertures traversantes (41m, 51m) des deux extrémités adjacentes (4m, 5m).

5. Procédé selon la revendication 2, comprenant l'étape supplémentaire qui consiste à insérer les broches (9b) dans l'alésage (4d, 5d; 41k) des anneaux intérieurs (4a, 5a) et/ou dans une ouverture (8e) de l'anneau extérieur (8) afin d'attacher les anneaux intérieurs adjacents (4a, 5a) l'un à l'autre.
